# FASCICULE DE BREVET EUROPEEN

(11) **EP 2 210 757 B1**
(45) Date de publication et mention de la délivrance du brevet: **06.06.2018**
(21) Numéro de dépôt: 09290049.7
(22) Date de dépôt: 23.01.2009
(51) Int. Cl.: B60K 1/02

(54) **Système d'entrainement électrique des roues motrices d'un véhicule automobile et procédé de pilotage**
Fahrzeug und Antriebseinheit mit elektrischen Antriebsmotoren und Steuerungsverfahren
Vehicle and drive unit with electric motors and control method

(43) Date de publication de la demande: 28.07.2010
(73) Titulaire: Greengt SA, 1052 Mont sur Lausanne (CH)
(72) Inventeur: Weber, Jean-François, 1052 Le Mont sur Lausanne (CH); Schwartz, Christophe, 1006 Lausanne (CH); van Popering, Trevor, 1256 Troinex (CH)
(74) Mandataire: Micheli & Cie SA

(56) Documents cités:
- EP-A- 0 826 543
- EP-B- 1 551 658
- WO-A-03/101765
- FR-A- 1 110 589
- GB-A- 1 163 216
- JP-A- 2 306 828
- US-A- 6 024 182

## Description

L'invention concerne un système d'entrainement des roues motrices d'un véhicule automobile électrique, un train de roues motrices comprenant un tel système d'entrainement ainsi qu'un procédé de pilotage d'un tel train de roues motrices.

L'invention vise à proposer un système d'entrainement électrique qui, outre la fonction motrice des roues, intègre les fonctions de boîte de vitesses et de différentielle.

Le système d'entrainement selon l'invention présente notamment une rigidité améliorée. En particulier, le système permet la transmission d'un couple moteur important, notamment pour être utilisé dans un véhicule électrique pour la course automobile.

En outre, le système d'entrainement proposé est particulièrement compact, ce qui facilite sa réalisation ainsi que son intégration dans le véhicule automobile. En particulier, le train de roues motrices qui comprend le système d'entrainement peut être intégré en tant que module dans le véhicule automobile, afin notamment d'assurer les fonctions motrices ainsi que de liaison au sol desdites roues.

Par ailleurs, dans le système d'entrainement proposé, l'entrainement d'une roue motrice est mécaniquement désaccouplé de celui de l'autre roue, ce qui permet de faciliter le pilotage du train de roues motrices, notamment de façon différentielle entre les deux roues motrices.

Le document JP2306828 A décrit un système d'entraînement électrique des roues motrices pour véhicules selon le préambule de la revendication 1. L'objectif de l'invention est atteint par la combinaison des caractéristiques comprises dans la revendication 1 et aussi plus particulièrement par le procédé de pilotage de la revendication 10. L'invention vise à perfectionner l'art antérieur en proposant notamment un système d'entrainement des roues motrices d'un véhicule automobile, ledit système comprenant deux moteurs électriques et un carter sur lequel lesdits moteurs sont montés, ledit système comprenant en outre deux pignons - respectivement droit et gauche - qui sont montés dans ledit carter en étant indépendants en rotation, lesdits pignons étant solidaires en rotation d'un rotor de respectivement un moteur pour être chacun entraînés en rotation par un rotor, ledit système comprenant en outre deux roues dentées - respectivement droite et gauche - qui sont montées dans ledit carter pour être entraînées en rotation par respectivement un pignon, chaque roue dentée étant solidaire en rotation d'un moyen de liaison avec une roue motrice.

Selon un deuxième aspect, l'invention propose un train de roues motrices pour véhicule automobile, ledit train comprenant un tel système d'entrainement, une roue motrice étant montée de part et d'autre du carter par l'intermédiaire d'un arbre de transmission qui est solidaire en rotation d'une roue dentée.

Selon un troisième aspect, l'invention propose un procédé de pilotage d'un tel train de roues motrices, dans lequel chaque roue motrice est entraînée en rotation par commande de respectivement un moteur électrique.

D'autres particularités et avantages de l'invention apparaîtront dans la description qui suit, faite en référence aux figures jointes dans lesquelles :
- la figure 1 est une vue en perspective d'un train de roues motrices selon un mode de réalisation de l'invention ;
- les figures 2 sont des vues montrant le système d'entrainement du train de roues motrices selon la figure 1, respectivement en perspective (figure 2a) et de côté (figure 2b) ;
- la figure 3 est une vue en perspective de dessous du système d'entrainement des figures 2, dans laquelle les moteurs ne sont pas représentés ;
- la figure 4 est une vue écorchée partielle montrant l'intérieur du carter du système d'entrainement selon la figure 3 ;
- la figure 5 est une vue en coupe selon la ligne V-V de la figure 2b.

En relation avec ces figures, on décrit ci-dessous un mode de réalisation d'un train de roues motrices pour un véhicule automobile électrique. En particulier, le train représenté comprend les deux roues arrières 1 de propulsion d'un véhicule automobile, notamment d'un véhicule pour faire de la course automobile sur circuit.

Le train intègre un système d'entrainement des roues motrices 1 qui comprend deux moteurs électriques 2 et un carter 3 sur lequel lesdits moteurs sont montés. En particulier, le carter 3 peut être réalisé de façon monobloc en un matériau rigide et léger, par exemple en matériau métallique tel que l'aluminium. En outre, le carter 3 peut présenter des moyens d'association au véhicule automobile, par exemple sous la forme d'une plaque 4 à boulonner sur le cockpit du véhicule de course.

Concernant les moteurs 2, ils peuvent être de tout type adapté pour la propulsion du véhicule automobile, notamment relativement à leur compacité et à leur puissance. En particulier pour la course automobile, les moteurs 2 peuvent développer plus de 200 kW et 400 nM, par exemple en étant alimentés en électricité par l'intermédiaire d'une source d'énergie électrique.

Dans le mode de réalisation représenté, les moteurs 2 sont fixés de part et d'autre du carter 3, respectivement sur une paroi latérale dudit carter. En outre, les moteurs 2 présentent un rotor 5 dont l'axe s'étend sensiblement parallèlement à l'axe de rotation des roues motrices 1.

Pour assurer leur entraînement en rotation, les roues motrices 1 sont montées de part et d'autre du carter 3 par l'intermédiaire d'un arbre de transmission 6, par exemple à cardan. En outre, chaque roue motrice 1 est associée au carter 3 par l'intermédiaire d'au moins un bras 7, l'extrémité desdits bras et les parois latérales du carter 3 comprenant des moyens d'association réciproques 8.

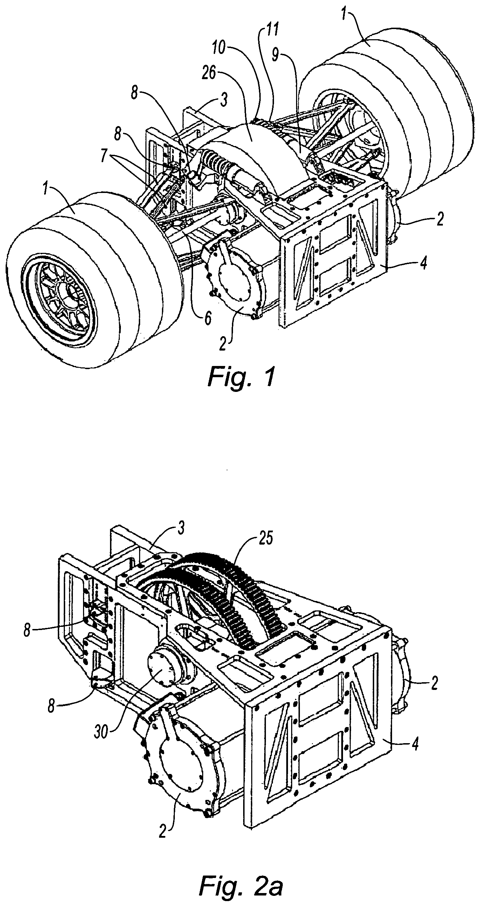

Sur la figure 1, le train assure également la fonction de liaison au sol des roues motrices 1. Pour ce faire, chacune des roues motrices 1 est équipée d'un dispositif de suspension par rapport au carter 3. Chaque dispositif présente un corps 9 de piston qui est monté sur le carter 3 et une tige 10 qui est associée sur l'extrémité d'un bras 7. Plus précisément, le corps 9 est disposé sur le carter 3 et la tige 10 est entourée d'un ressort 11 en s'étendant sensiblement perpendiculairement par rapport à l'axe de rotation des roues motrices 1.

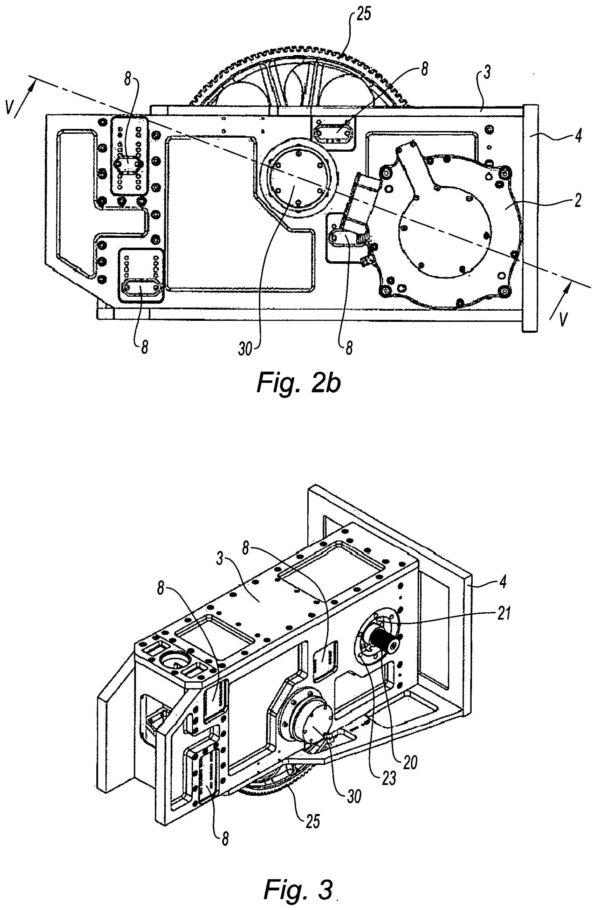

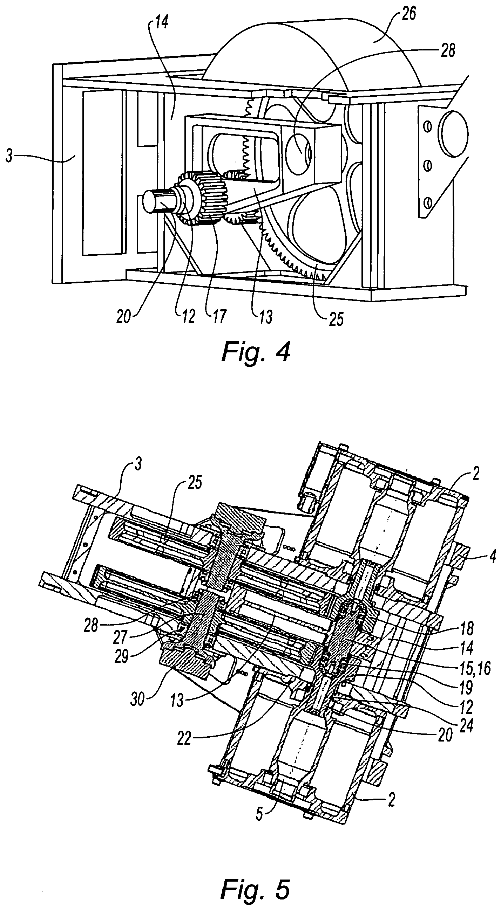

En relation avec les figures 2 à 5, on décrit ci-dessous le système d'entrainement qui comprend en outre deux pignons 12 - respectivement droit et gauche - qui sont montés dans le carter 3 en étant indépendants en rotation.

Plus précisément, le carter 3 présente une traverse centrale 13 qui s'étend, depuis une paroi transversale 14 du carter 3, sensiblement perpendiculaire par rapport à l'axe de rotation des roues motrices 1. La traverse 14 est pourvue d'un alésage 15 dans lequel est monté un axe primaire 16, les pignons 12 étant montés en rotation sur respectivement une partie extrême dudit axe.

Par ailleurs, chaque pignon 12 présente des dents 17 qui sont formées extérieurement sur une couronne intérieure 18. Sur les figures, le montage du pignon 12 sur l'axe primaire 16 est réalisé par l'intermédiaire d'un roulement 19 dont la bague extérieure tournante est montée dans la couronne 18 et dont la bague intérieure fixe est montée sur l'extrémité dudit axe.

En outre, la partie extérieure du pignon 12 comprend un moyen d'engrenage 20 avec le rotor 5 du moteur 2, notamment sous la forme d'une partie cannelée, de sorte que les pignons 12 soient solidaires en rotation d'un rotor 5 de respectivement un moteur 2 pour être chacun entraînés en rotation par lui.

Pour permettre le montage des pignons 12 dans le carter 3, les parois latérales présentent des orifices 21 de montage desdits pignons sur l'axe 16, le diamètre desdits orifices étant supérieur à celui des pignons 12, notamment au diamètre extérieur de la couronne 18, de sorte à permettre le passage desdits pignons au travers d'eux.

En outre, les moteurs 2 comprennent un capot avant 22 de recouvrement des orifices 21 lors de leur fixation sur les parois latérales du carter 3. Plus précisément, les capots avant 22 sont pourvus des moyens de fixation des moteurs 2 sur le carter 3, les moyens réciproques 23 étant formés sur la périphérie des orifices 21 de montage.

Par ailleurs, comme représentées notamment sur la figure 3, les parties extérieures des pignons 12 sont saillantes des parois latérales du carter 3, notamment au niveau de leur partie cannelée 20. En outre, les capots avant 22 présentent un alésage dans lequel lesdites parties extérieures sont reçues, lesdits alésages étant équipés d'un roulement 24 de guidage en rotation desdites parties extérieures.

Le système d'entrainement comprend en outre deux roues dentées 25 - respectivement droite et gauche - qui sont montées dans ledit carter pour être entraînées en rotation par respectivement un pignon 12. Le diamètre des roues dentées 25 est supérieur à celui des pignons 12 de sorte à assurer un rapport de réduction entre le rotor 5 et ladite roue dentée. En outre, le carter 3 est équipé d'un capot 26 de recouvrement des roues dentées 25.

Dans le mode de réalisation représenté, les roues dentées 25 intègrent, de façon rapportée ou monobloc, un axe secondaire 27 de rotation. La partie intérieure de chaque axe secondaire 27 est montée en rotation dans un alésage 28 de la traverse centrale 13, sa partie extérieure étant montée en rotation dans un orifice 29 formé dans respectivement une paroi latérale du carter 3.

Par ailleurs, la partie extrême extérieure de chaque axe secondaire 27 est pourvue du moyen de liaison 30 avec une roue motrice 1, notamment de liaison avec l'arbre de transmission 6. Ainsi, chaque roue motrice 1 montée sur le carter 3 est solidaire en rotation d'une roue dentée 25, lesdites roues dentées étant entrainées en rotation par respectivement un ensemble moteur 2 - pignon 12, lesdits ensembles étant désaccouplés mécaniquement en rotation l'un de l'autre.

Par conséquent, l'entrainement des roues motrices 1 est mécaniquement désaccouplé et le pilotage du train peut être réalisé en entraînant en rotation chaque roue motrice 1 par commande de respectivement un moteur électrique 2.

En particulier, la commande des moteurs électriques 2 peut être réalisée de sorte à pouvoir assurer un différentiel de vitesse de rotation et/ou de couple entre les roues motrices 1. Ainsi, outre la fonction motrice des roues 1, le système d'entrainement intègre les fonctions de boîte de vitesses et de différentielle, et ce par simple commande des moteurs électriques 2.

En outre, le pilotage du train peut prévoir la mesure d'au moins un paramètre de roulage de chacune des roues motrices 1, par exemple de sa vitesse de rotation. Ainsi, la commande de chacun des moteurs électriques 2 peut être réalisée en fonction du paramètre correspondant à la roue 2 qu'il entraine.

Cette réalisation permet notamment d'optimiser les vitesses respectives de rotation des roues motrices 1 en fonction de la trajectoire du véhicule, d'optimiser le couple transmis par l'intermédiaire de chacune des roues motrices 1 ainsi que d'assurer une fonction de sécurité en commandant les moteurs 2 de sorte à pouvoir compenser une condition de roulage dangereuse.

## Revendications

1. Système d'entrainement des roues motrices (1) d'un véhicule automobile, ledit système comprenant un carter (3) et deux moteurs électriques (2) fixés sur respectivement une paroi latérale du carter, ledit système comprenant en outre deux pignons (12) - respectivement droit et gauche - qui sont montés dans ledit carter en étant indépendants en rotation, lesdits pignons étant solidaires en rotation d'un rotor (5) de respectivement un moteur (2) pour être chacun entraînés en rotation par un rotor (5), ledit système comprenant en outre deux roues dentées (25) - respectivement - droite et gauche - qui sont montées dans ledit carter pour être entrainées en rotation par respectivement un pignon (12), chaque roue dentée (25) étant solidaire en rotation d'un moyen de liaison (30) avec la roue motrice (1), le carter présentant une traverse centrale (13) et ledit système étant **caractérisé en ce qu'**un axe primaire (16) est monté dans un alésage (15) dont est pourvue la traverse centrale (13), les pignons (12) étant montés en rotation sur respectivement une partie extrême dudit axe, et **en ce que** les parois latérales du carter (3) présentent des orifices (21) de montages des pignons (12) dans le carter, le diamètre desdits orifices étant supérieur à celui des pignons et les moteurs (2) comprenant un capot avant (22) de recouvrement desdits orifices lors de leurs fixation sur lesdites parois latérales.

2. Système d'entrainement selon la revendication 1, **caractérisé en ce que** le pignon (12) présente des dents (17) qui sont formées sur une couronne intérieure (18), la partie extérieure dudit pignon comprenant un moyen d'engrenage (20) avec le rotor (5) du moteur (2).

3. Système d'entrainement selon la revendication 1 ou 2, **caractérisé en ce que** les parties extérieures des pignons (12) sont saillantes du carter (3), les capots avant (22) présentant un alésage dans lequel lesdites parties extérieures sont reçues, lesdits alésages étant équipés d'un moyen de guidage (24) en rotation desdites parties extérieures.

4. Système d'entrainement selon l'une quelconque des revendications 1 à 3, **caractérisé en ce que** les roues dentées (25) intègrent un axe secondaire (27), la partie intérieure de chaque axe secondaire (27) étant montée en rotation dans un alésage (28) de la traverse centrale (13), sa partie extérieure étant montée en rotation dans un orifice (29) formé dans respectivement une paroi latérale du carter (3).

5. Système d'entrainement selon la revendication 4, **caractérisé en ce que** la partie extrême extérieure de chaque axe secondaire est pourvue du moyen de liaison avec une roue motrice.

6. Système d'entrainement selon l'une quelconque des revendications 1 à 5, **caractérisé en ce que** le carter (3) présente ne outre des moyens d'association (4) au véhicule automobile.

7. Train de roues motrices pour véhicule automobile, ledit train comprenant un système d'entraînement selon l'une quelconque des revendications 1 à 6, une roue motrice (1) étant montée de part et d'autre du carter (3) par l'intermédiaire d'un l'arbre de transmission (6) qui est solidaire en rotation d'une roue dentée (25).

8. Train de roues motrices selon la revendication 7, **caractérisé en ce que** chaque roue motrice (1) est associée au carter (3) par l'intermédiaire d'au moins un bras (7).

9. Train de roues motrices selon la revendication 8, **caractérisé en ce que** chacune des roues motrices (1) est équipée d'un dispositif de suspension par rapport au carter (3), lesdits dispositifs présentant un corps (9) monté sur le carter (3) et une tige (10) associée à au moins un bras (7).

10. Procédé de pilotage d'un train de roues motrices (1) selon l'une quelconque des revendications 7 à 9, dans lequel chaque roue motrice (1) est entraînée en rotation par commande de respectivement un moteur électrique (2).

11. Procédé de pilotage selon la revendication 10, **caractérisé en ce que** la commande des moteurs électriques (2) est réalisée de sorte à pouvoir assurer un différentiel de vitesse de rotation et/ou de couple entre les roues motrices (1).

12. Procédé de pilotage selon la revendication 11, **caractérisé en ce qu'**il prévoit la mesure d'au moins un paramètre de roulage de chacune des roues motrices (1), la commande de chacun des moteurs électriques (2) étant réalisée en fonction du paramètre correspondant à la roue (1) qu'il entraîne.

## Patentansprüche

1. Antriebssystem für die Antriebsräder (1) eines Kraftfahrzeugs, wobei das System ein Gehäuse (3) und zwei Elektromotoren (2) umfasst, die an jeweils einer Seitenwand des Gehäuses befestigt sind, wobei das System ferner zwei Ritzel (12) - ein rechtes beziehungsweise ein linkes - umfasst, die in dem Gehäuse unabhängig drehbar gelagert sind, wobei die Ritzel mit einem Rotor (5) von jeweils einem Motor (2) drehfest sind, um jeweils durch einen Rotor (5) drehbar angetrieben zu werden, wobei das System ferner zwei Zahnräder (25) - ein rechtes beziehungsweise ein linkes - umfasst, die in dem Gehäuse gelagert sind, um durch jeweils ein Ritzel (12) drehbar angetrieben zu werden, wobei jedes Zahnrad (25) drehfest mit einem Verbindungsmittel (30) mit dem Antriebsrad (1) ist, wobei das Gehäuse einen mittleren Querträger (13) aufweist und das System **dadurch gekennzeichnet ist, dass** eine Hauptachse (16) in einer Bohrung (15) gelagert ist, mit der der mittlere Querträger (13) versehen ist, wobei die Ritzel (12) auf jeweils einem äußeren Teil der Achse drehbar gelagert sind, und dadurch, dass die Seitenwände des Gehäuses (3) Öffnungen (21) für die Montage der Ritzel (12) in dem Gehäuse aufweisen, wobei der Durchmesser der Öffnungen größer als derjenige der Ritzel ist und die Motoren (2) eine vordere Haube (22) zur Abdeckung der Öffnungen bei ihrer Befestigung an den Seitenwänden umfassen.

2. Antriebssystem nach Anspruch 1, **dadurch gekennzeichnet, dass** das Ritzel (12) Zähne (17) aufweist, die auf einem Innenkranz (18) gebildet sind, wobei der äußere Teil des Ritzels ein Eingriffsmittel (20) mit dem Rotor (5) des Motors (2) umfasst.

3. Antriebssystem nach Anspruch 1 oder 2, **dadurch gekennzeichnet, dass** die äußeren Teile der Ritzel (12) von dem Gehäuse (3) hervorstehen, wobei die vorderen Hauben (22) eine Bohrung aufweisen, in der die äußeren Teile aufgenommen sind, wobei die Bohrungen mit einem Mittel (24) zur drehbaren Führung der äußeren Teile ausgerüstet sind.

4. Antriebssystem nach einem der Ansprüche 1 bis 3, **dadurch gekennzeichnet, dass** die Zahnräder (25) eine Nebenachse (27) einbeziehen, wobei der innere Teil von jeder Nebenachse (27) in einer Bohrung (28) des mittleren Querträgers (13) drehbar gelagert ist, wobei ihr äußerer Teil in einer Öffnung (29) drehbar gelagert ist, die in jeweils einer Seitenwand des Gehäuses (3) gebildet ist.

5. Antriebssystem nach Anspruch 4, **dadurch gekennzeichnet, dass** der äußere Endteil von jeder Nebenachse mit einem Verbindungsmittel mit einem Antriebsrad versehen ist.

6. Antriebssystem nach einem der Ansprüche 1 bis 5, **dadurch gekennzeichnet, dass** das Gehäuse (3) ferner Mittel (4) zur Verbindung mit dem Kraftfahrzeug umfasst.

7. Antriebsradsatz für Kraftfahrzeuge, wobei der Satz ein Antriebssystem nach einem der Ansprüche 1 bis 6 umfasst, wobei ein Antriebsrad (1) mittels einer Antriebswelle (6), die drehfest mit einem Zahnrad (25) verbunden ist, auf beiden Seiten des Gehäuses (3) gelagert ist.

8. Antriebsradsatz nach Anspruch 7, **dadurch gekennzeichnet, dass** jedes Antriebsrad (1) über mindestens einen Arm (7) mit dem Gehäuse (3) verbunden ist.

9. Antriebsradsatz nach Anspruch 8, **dadurch gekennzeichnet, dass** jedes von den Antriebsrädern (1) mit einer Vorrichtung zur Aufhängung in Bezug auf das Gehäuse (3) versehen ist, wobei die Vorrichtungen einen Körper (9), der an dem Gehäuse (3) gelagert ist, und eine Stange (10) aufweisen, die mit mindestens einem Arm (7) verbunden ist.

10. Verfahren zur Steuerung eines Antriebsradsatzes (1) nach einem der Ansprüche 7 bis 9, wobei jedes Antriebsrad (1) durch Betätigung von jeweils einem Elektromotor (2) angetrieben wird.

11. Steuerungsverfahren nach Anspruch 10, **dadurch gekennzeichnet, dass** die Betätigung der Elektromotoren (2) derart ausgeführt wird, dass ein Unterschied bei der Drehgeschwindigkeit und/oder dem Drehmoment zwischen den Antriebsrädern (1) gewährleistet werden kann.

12. Steuerverfahren nach Anspruch 11, **dadurch gekennzeichnet, dass** es die Messung von mindestens einem Rollparameter von jedem der Antriebsräder (1) vorsieht, wobei die Betätigung von jedem von den Elektromotoren (2) in Abhängigkeit von dem Parameter ausgeführt wird, der dem durch ihn angetriebenen Rad (1) entspricht.

## Claims

1. A driving system for the drive wheels (1) of a motor vehicle, said system comprising a casing (3) and two electric motors (2) fixed respectively to a side wall of the casing, said system further comprising two pinions (12) - respectively right and left - which are mounted in said casing to be independent in rotation, said pinions being secured in rotation to a rotor (5) of respectively a motor (2) to be each rotated by a rotor (5), said system further comprising two toothed wheels (25) - respectively - right and left - which are mounted in said casing to be rotated by respectively a pinion (12), each toothed wheel (25) being secured in rotation to a connecting means (30) with the driving wheel (1), the casing having a central crosspiece (13) and said system being **characterised in that** a primary shaft (16) is mounted in a bore (15), with which the central crosspiece (13) is provided, the pinions (12) being rotatably mounted respectively on an end portion of said shaft, and **in that** the side walls of the casing (3) have orifices (21) for mounting the pinions (12) in the casing, the diameter of said orifices being greater than that of the pinions and the motors (2) comprising a front cover (22) covering said orifices during their attachment to said side walls.

2. The driving system according to claim 1, **characterised in that** the pinion (12) has teeth (17) which are formed on an inner ring (18), the outer part of said pinion comprising gearing means (20) with the rotor (5) of the motor (2).

3. The driving system according to claim 1 or 2, **characterised in that** the outer parts of the pinions (12) are protruding from the casing (3), the front covers (22) having a bore in which said outer parts are received, said bores being provided with means (24) for guiding said outer portions in rotation.

4. The driving system according to any one of claims 1 to 3, **characterised in that** the toothed wheels (25) incorporate a secondary axis (27), the inner portion of each secondary axis (27) being rotatably mounted in a bore (28) of the central crosspiece (13), its outer part being rotated in an orifice (29) formed in a side wall of the casing (3), respectively.

5. The driving system according to claim 4, **characterised in that** the outer end portion of each secondary axis is provided with the connecting means with a drive wheel.

6. The driving system according to any one of claims 1 to 5, **characterised in that** the casing (3) further comprises means of association (4) to the motor vehicle.

7. A drive wheel assembly for a motor vehicle, said assembly comprising a driving system according to any one of claims 1 to 6, a drive wheel (1) being mounted on either side of the casing (3) via a transmission shaft (6) which is secured in rotation to a toothed wheel (25).

8. The drive wheel assembly according to claim 7, **characterised in that** each drive wheel (1) is associated with the casing (3) via at least one arm (7).

9. The drive wheel assembly according to claim 8, **characterised in that** each of the drive wheels (1) is fitted with a suspension device with respect to the casing (3), said devices having a body (9) mounted on the casing (3) and a rod (10) associated with at least one arm (7).

10. A control method of a drive wheel assembly (1) according to any one of claims 7 to 9, wherein each drive wheel (1) is rotated by controlling respectively an electric motor (2).

11. The control method according to claim 10, **characterised in that** the control of the electric motors (2) is performed so as to ensure a rotational speed differential and/or a torque differential between the drive wheels (1).

12. The control method according to claim 11, **characterised in that** it provides for the measurement of at least one running parameter of each of the drive wheels (1), the control of each of the electric motors (2) being performed according to the parameter corresponding to the wheel (1) that it drives.
